Europäisches Patentamt

European Patent Office

Office européen des brevets

(11) Numéro de publication: **0 237 385**
A1

# (12) DEMANDE DE BREVET EUROPEEN

(21) Numéro de dépôt: **87400299.1**

(22) Date de dépôt: **10.02.87**

(51) Int. Cl.⁴: **B 61 D 3/18**
B 62 D 61/12, B 62 D 53/06,
B 60 G 17/04, B 60 T 7/12

(30) Priorité: **11.02.86 FR 8601831**

(43) Date de publication de la demande:
**16.09.87 Bulletin 87/38**

(84) Etats contractants désignés:
**BE DE ES GB IT NL**

(71) Demandeur: **TRAILOR S.A.**
**3 route nationale 10 "Le Gibet" Coignieres**
**F-78311 Maurepas Cedex (FR)**

(72) Inventeur: **Larchet, Pierre**
**11 rue François Guinet**
**F-54000 Nancy (FR)**

(74) Mandataire: **Barnay, André François**
**Cabinet Barnay 80 rue Saint-Lazare**
**F-75009 Paris (FR)**

(54) Dispositif de commande automatique de la suspension et des freins d'une semi-remorque du type rail-route et semi-remorque du type rail-route associée.

(57) Dans ce dispositif de commande de la suspension pneumatique à hauteur variable et des freins d'une remorque rail-route, le pare-chocs arrière articulé (5) actionne des moyens (16) pour isoler les organes (8) de suspension et des moyens (17) pour desserrer les freins.

Des soupapes (18) de purge des organes (8) de suspension sont ouvertes par les pions (36) du wagon et le dégonflage de ces organes actionne des vérins (19) pour verrouiller les essieux (2).

FIG.1

EP 0 237 385 A1

Bundesdruckerei Berlin

**Description**

Dispositif de commande automatique de la suspension et des freins d'une semi-remorque du type rail-route et semi-remorque du type rail-route associée.

La présente invention concerne d'une façon générale les semi-remorques du type rail-route à suspension pneumatique à hauteur variable et pare-chocs relevable et elle est plus particulièrement relative à un dispositif automatique de commande de la suspension et du freinage.

Le gabarit routier autorisant des dimensions supérieures à celles imposées par le gabarit des voies ferrées, on a été conduit à mettre au point un système de suspension à hauteur variable, permettant ainsi une utilisation d'un volume maximale pouvant cependant entrer dans le gabarit des voies ferrées simplement en abaissant la suspension afin de diminuer la hauteur de la semi-remorque lorsque celle-ci doit être chargée sur un wagon-poche.

Le dispositif de suspension de ces remorques est pneumatique et comporte pour chaque roue un soufflet gonflable relié dans un circuit pneumatique général pouvant être raccordé au véhicule tracteur.

La mise sur wagon d'une telle remorque nécessite de la part du conducteur d'une part le relevage du pare-chocs en position haute et d'autre part une opération supplémentaire qui consiste à régler le dispositif de suspension à sa hauteur minimale avant le chargement de la semi-remorque sur wagon.

A la suite de ces opérations, l'air sous pression contenu dans les soufflets s'échappe dans l'atmosphère et la pression doit être reconstituée à chaque opération.

Par ailleurs, ces systèmes de suspension pneumatique sont prévus de telle sorte que lorsque le circuit de la semi-remorque est désaccouplé du véhicule tracteur les freins sont automatiquement serrés. Par conséquent lorsque la remorque déchargée du wagon est reposée sur le sol et que son système de suspension est remis sous pression il se produit un mouvement de recul limité de la semi-remorque qui est susceptible de provoquer une rupture de la béquille de soutien de la partie avant de la semi-remorque lorsque celle-ci repose sur le sol. En conséquence les freins doivent être desserrés avant la remise en pression du système de suspension et ceci constitue une opération supplémentaire.

Il n'existe actuellement aucun moyen de contrôle permettant de vérifier que la seconde opération consistant à abaisser la suspension a bien été effectuée.

L'invention a pour but de remédier à ces inconvénients en réalisant un dispositif de sécurité grâce auquel toutes les opérations nécessaires pour la mise sur wagon sont effectuées automatiquement sans perte de pression tout en évitant un temps d'immobilisation relativement long de la semi-remorque avant son chargement sur wagon.

L'invention a pour objet à cet effet, un dispositif de commande automatique de la suspension pneumatique à hauteur variable et des freins d'une semi-remorque du type rail-route comportant un pare-chocs arrière relevable et adapté pour être transporté sur un wagon-poche comportant des organes de retenue coopérant avec la remorque, caractérisé en ce qu'il comprend : des premiers et seconds moyens reliés mécaniquement au pare-chocs pour isoler les organes pneumatiques de suspension et pour desserrer les freins, respectivement, des troisièmes moyens pour verrouiller les essieux et des quatrième moyens adaptés pour coopérer avec les organes de retenue du wagon et purger lesdits organes pneumatiques de suspension.

La description qui va suivre, en regard des dessins annexés à titre d'exemple non limitatif, permettra de bien comprendre comment l'invention peut être mise en pratique.

La figure 1 est une vue schématique en élévation latérale montrant le châssis d'une semi-remorque destinée à être chargée sur wagon-poche.

La figure 2 est un schéma d'une partie du circuit pneumatique du dispositif de suspension faisant apparaître seulement les moyens prévus selon l'invention pour isoler les organes de suspension, desserrer les freins, verrouiller les essieux et purger les organes de suspension.

La figure 3 est une vue partielle à plus grande échelle montrant l'extrémité arrière de la semi-remorque.

La figure 4 est une vue partielle à plus grande échelle en coupe suivant la ligne IV-IV de la figure 3.

La figure 5 est une vue partielle des moyens de verrouillage d'essieux.

La figure 6 est une vue partielle à plus grande échelle montrant l'actionnement des moyens pour isoler les organes de suspension par les organes de retenue du wagon.

La figure 7 est une vue en coupe suivant la ligne VII-VII de la figure 6.

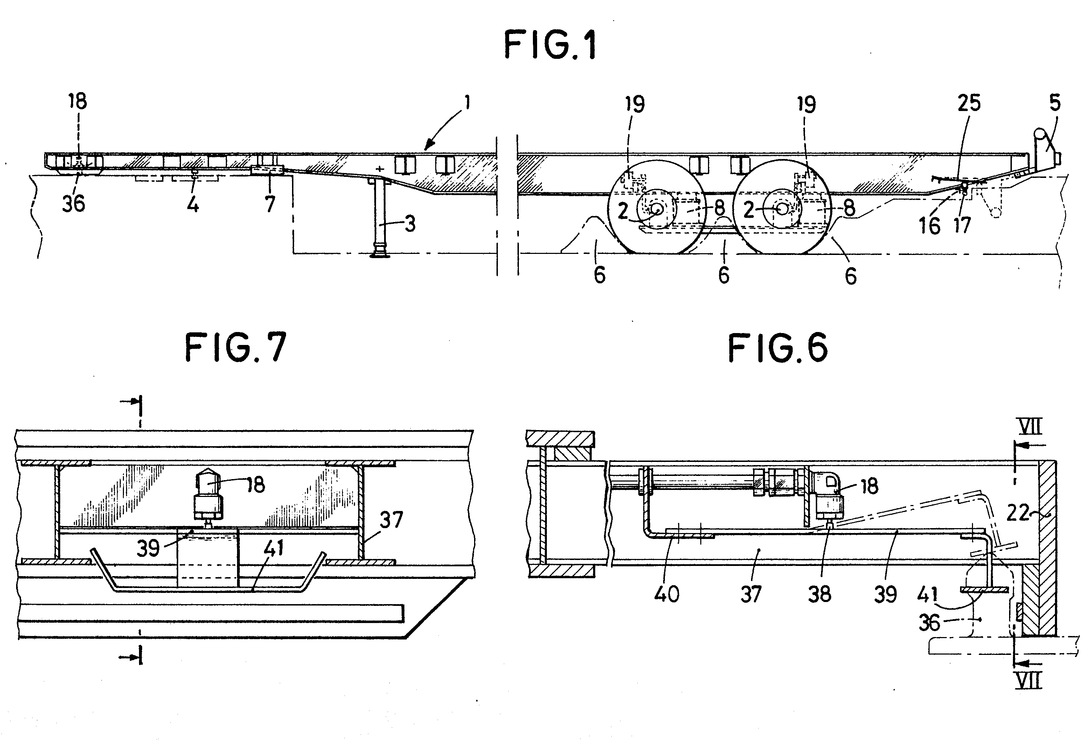

En se référant au dessin mais plus particulièrement à la figure 1, une semi-remorque du type rail-route à suspension pneumatique à hauteur variable comprend comme connu en soi un châssis désigné dans son ensemble par la référence 1 ayant par exemple deux essieux 2, une béquille 3, une cheville ouvrière 4 et une pare-chocs arrière 5 relevable.

La semi-remorque repose sur le wagon par ses roues qui sont calées par des moyens 6 prévus sur le wagon tandis que l'avant du châssis repose sur des moyens de soutien 7 et 36 supplémentaires.

Le dispositif de suspension pneumatique comporte pour chaque essieu une paire de soufflets 8 dont le débattement en hauteur est limité par des câbles comme connu en soi (non représentés au dessin).

Comme connu en soi également, le pare-chocs arrière 5 est relevable comme représenté en trait plein à la figure 1 en position de transport sur wagon. La position normale sur route de ce pare-chocs est représentée en trait enterrompu c'est-à-dire abaissée.

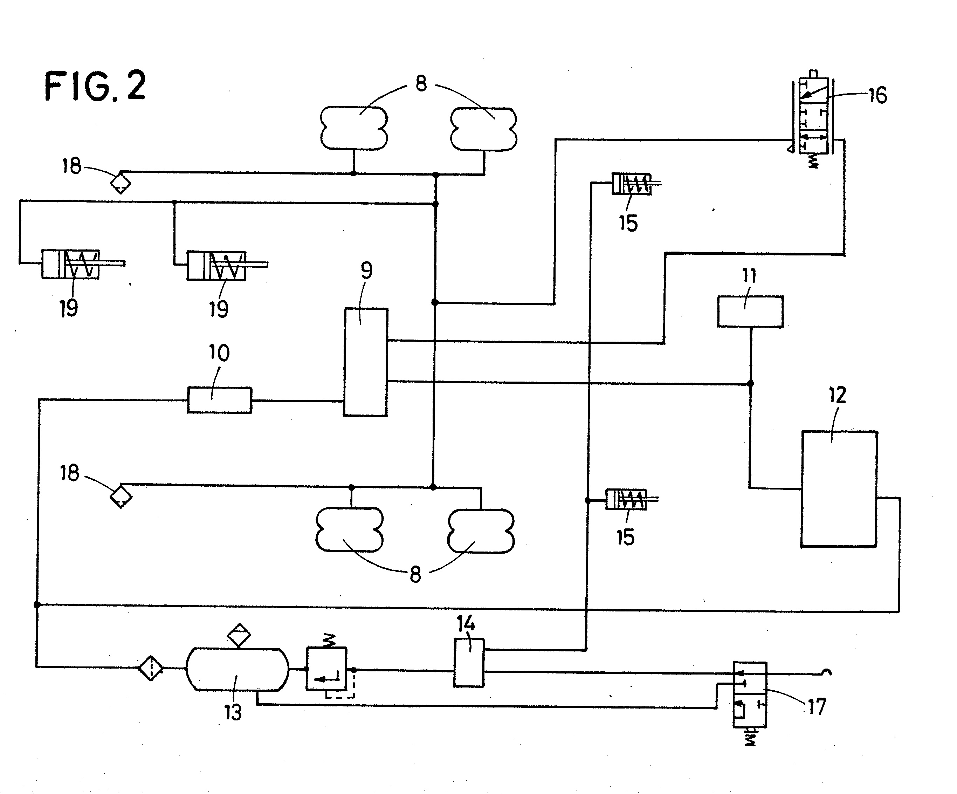

En se reportant à la figure 2 qui montre une partie du circuit pneumatique de la suspension, celui-ci comporte comme connu en soi les soufflets 8 pour les deux essieux, une vanne 9 de réglage de hauteur, une vanne 10 d'arrêt, une prise de pression 11, une vanne 12 de nivellement et un réservoir 13. Comme connu en soi également il est prévu une vanne relais d'urgence 14, dans le circuit des vases de freins 15.

Suivant l'invention il est prévu une vanne de coupure 16 reliée dans le circuit de façon à permettre d'isoler totalement les soufflets 8 de suspension, une soupape supplémentaire l7 pour la mise à l'atmosphère des vases 15 de freins, la vanne 16 et la soupape 17 étant commandées par le pare-chocs articulé 5 comme on l'expliquera dans la suite, une soupape 18 de mise à l'atmosphère des deux soufflets latéraux sur chaque côté de la semi-remorque, ces soupapes étant adaptées pour être actionnées par les organes de retenue du wagon comme on le décrira dans la suite, et des vérins pneumatiques 19 de commande de verrouillage des essieux, reliés dans le circuit des soufflets 8.

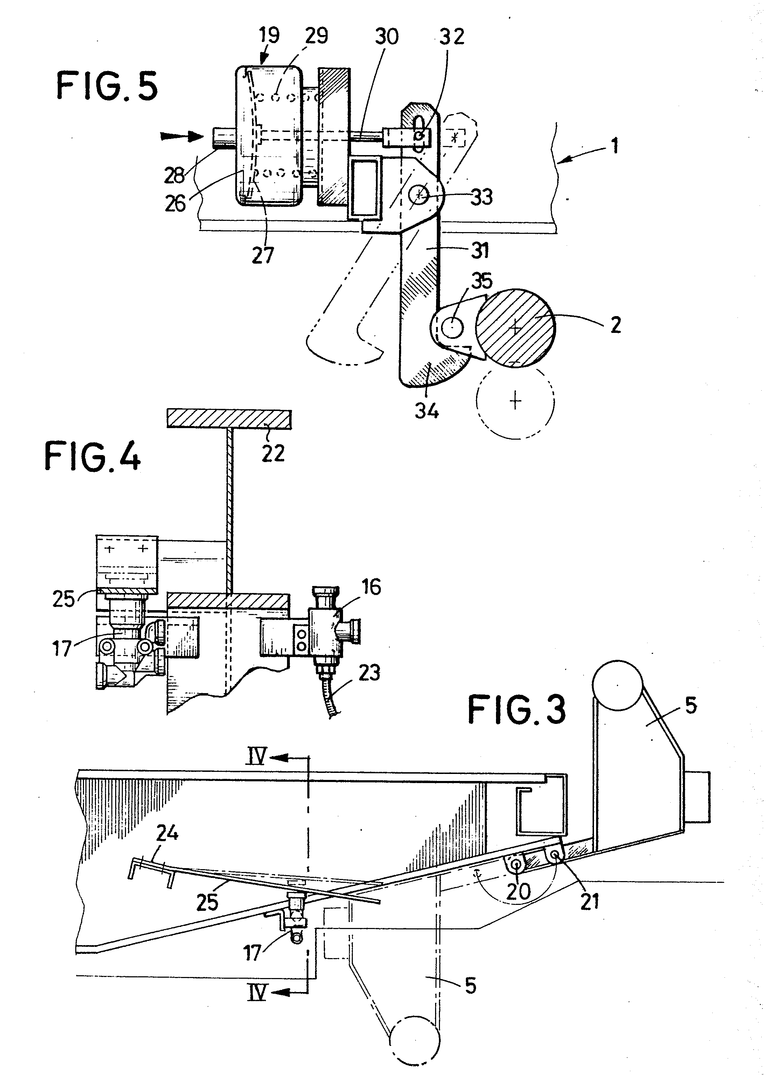

On se référera maintenant à la figure 3 qui montre l'extrémité arrière du châssis de la semi-remorque.

Comme connu en soi le pare-chos 5 est articulé autour d'un axe 20 de façon à pouvoir être déplacé entre une première position basse de route représentée en trait mixte et une position haute dite de chargement lorsque la semi-remorque ets placée sur un wagon. Dans cette dernière position représentée en trait plein, le pare-chos est maintenu au moyen d'une goupille 21.

En se reportant à la figure 4, qui est une vue en coupe suivant la ligne IV-IV de la figure 3, un longeron 22 du châssis porte sur un côté la vanne d'arrêt 16 qui est intercalée dans le circuit pneumatique des soufflets de suspension. L'obturateur de la vanne 16 est sollicité en position d'ouverture par un ressort et est d'autre part relié au pare-chocs 5 par un câble Bowden 23 de manière que la vanne soit placée en position de fermeture lorsque le pare-chocs 5 est relevé de sa position basse à sa position haute.

Sur son côté opposé, le longeron 22 comporte la soupape 17 de mise à l'atmosphère des vases de freins 15. Cette soupape est disposée entre la position basse du pare-chocs 5 et une console 24 solidaire du châssis, sur laquelle est fixée une extrémité d'une lame de ressort 25 qui s'étend vers l'arrière en contact avec un poussoir d'actionnement de la soupape 17 et avec son extrémité libre s'étendant dans le trajet parcouru par le pare-chocs 5 lorsque celui-ci est déplacé de l'une de ses positions dans l'autre. Grâce à cet agencement et comme on le voit à la figure 3, le pare-chocs 5 en position basse déforme la lame de ressort 25 vers le haut en libérant ainsi le poussoir de la soupape 17. Au contraire lorsque le pare-chocs 5 est relevé en position rail, la lame de ressort 25 libérée se déplace vers le bas en exerçant une pression sur le poussoir de la soupape 17.

Comme on l'a indiqué en référence au schéma de circuit de la figure 2, les vases des vérins 19 son reliés dans le circuit des soufflets pneumatiques 8.

Un mode de réalisation de ces vérins est représenté à la figure 5. Chaque vérin 19 comporte une chambre étanche 26 fermée par une membrane déformable 27 et reliée au circuit pneumatique des soufflets 8 par un tuyau 28. Le membrane 27 est sollicitée par un ressort 29 dans une direction tendant à diminuer le volume de la chambre 26, et elle est en outre reliée en son centre par une tige rigide 30 à une extrémité d'un levier 31 au moyen d'une articulation 32. Le levier 31 est articulé de façon oscillante en un point situé entre ses extrémités par un axe 33 sur un point fixe du châssis. L'extrémité opposée du levier 31 présente un crochet 34 qui est adapté pour coopérer avec un organe d'accrochage 35 solidaire de l'essieu 2.

On comprend que lorsque le vérin 19 est alimenté en air comprimé par le tuyau 28, la pression agissant sur la membrane 27 repousse celle-ci à l'encontre de l'action du ressort 29 en maintenant ainsi le crochet 34 éloigné de l'organe d'accrochage 35 et de l'essieu 2. Au contraire, lorsque la pression est supprimée dans la chambre 26 le ressort 29 repousse la membrane 27 de telle sorte que le crochet 34 vient en prise avec l'organe d'accrochage 35, maintenant ainsi l'essieu 2 par rapport au châssis 1.

Les soupapes 18 de mise à l'atmosphère des soufflets 8, représentées aux figures 1 et 2, sont montées au voisinage de l'extrémité avant du châssis 1, à côté de chaque longeron.

On a représenté aux figures 6 et 7 l'agencement de l'une de ces soupapes sur le côté interne du longeron 22.

Comme on l'a indiqué plus haut, les wagons-poches utilisés pour le transport de ces semi-remorques comportent des organes de retenue destinés à maintenir des caisses mobiles sur le wagon. Ces organes de retenue sont constitués par des pions 36 s'étendant verticalement sur les bords du wagon et dont un exemple est représenté en trait mixte à la figure 6.

Une traverse 37 s'étend entre les longerons latéraux 22 dans une position telle que cette traverse se trouve au voisinage immédiat d'un pion 36 lorsque la semi-remorque est posée sur le wagon, par exemple en arrière du pion 36. De plus le longeron latéral 22 présente une hauteur telle que lorsque la semi-remorque est placée sur le wagon il s'étend au voisinage immédiat du pion 36 et l'extrémité supérieure de celui-ci s'étend vers le haut au-delà du bord inférieur de la traverse 37.

L'obturateur de la soupape 18 est sollicité en position de fermeture par un ressort et, dans cette position, l'extrémité 38 de sa tige fait saillie à l'extérieur et est en contact avec une partie intermédiaire d'une lame de ressort 39 fixée par une extrémité 40 sur la traverse 37 tandis que son extrémité opposée comport une plaque 41 qui s'étend au droit de l'emplacement du pion 36.

On comprend que lorsque la semi-remorque est posée sur le wagon, le sommet du pion 36 repousse la plaque 41 en déformant la lame de ressort 39 et en repoussant ainsi l'extrémité 38 de la tige de l'obturateur de la soupape 18 en position d'ouverture.

On décrira maintenant le fonctionnement du dispositif.

Lorsque la semi-remorque est arrêtée auprès du wagon pour être chargée sur celui-ci, le conducteur détèle son tracteur après avoir désaccouplé le circuit pneumatique de la semi-remorque, ce qui provoque automatiquement le serrage des freins.

Dans cet état, le dispositif de suspension pneumatique de la remorque se trouve en position haute de route, les soufflets étant gonflés.

Avant que la remorque soit saisie par un engin de levage pour la placer sur le wagon, le conducteur relève le pare-chocs arrière 5 et le verrouille dans sa position haute représentée en trait plein à la figure 3, dans laquelle il l'immobilise au moyen de la goupille 21.

En relevant le pare-chocs 5, le câble Bowden 23 ferme la vanne 16 ce qui a pour résultat d'isoler les soufflets 8 du reste du circuit pneumatique, à l'exception des vérins 19. Simultanément à la fermeture de la vanne 16, la lame de ressort 25 n'est plus maintenue par le pare-chocs et reprend élastiquement sa position basse en appuyant sur le poussoir de la soupape 17, desserrant ainsi les freins.

La pression enfermée dans les soufflets 8, qui est celle de la position haute, agit également dans les chambres 26 des vérins 19 sur les membranes 27, maintenant ainsi les crochets 34 éloignés des essieux 2.

La semi-remorque est alors prête à être posée sur le wagon. L'engin de levage utilisé saisit la remorque et la soulève, la pression régnant dans les soufflets opposant une résistance suffisante au poids des essieux et des roues pour éviter toutes détériorations des soufflets.

Lorsque la semi-remorque est posée sur le wagon, les pions 36 soulèvent les plaques 41, repoussant les lames de ressort 39 et ouvrant les soupapes 18. La pression régnant dans les souffets est alors purgée dans l'atmosphère et, par suite de sa disparition des chambres 26, ne s'oppose plus à l'action des ressorts 29 qui ramènent les crochets 34 en prise avec les organes 35 solidaires des essieux 2, ceux-ci se trouvant alors verrouillés par rapport au châssis.

Les soufflets se dégonflant, le châssis descend par rapport aux essieux, et la semi-remorque s'inscrit alors dans le gabarit imposé sans qu'il soit nécessaire d'effectuer une autre opération de manoeuvre supplémentaire.

Lors du déchargement du wagon, lorsque la remorque est soulevée, les pions 36 libèrent les lames de ressort 39 et ferment ainsi les soupapes 18. Cependant en l'absence de pression, les essieux 2 sont toujours verrouillés par le crochet 34 par rapport au châssis.

Dans cet état, la remorque posée sur le sol a ses freins desserrés, sa suspension en position basse et les soufflets 8 dégonflés isolés du circuit pneumatique d'alimentation par la fermeture de la vanne 16.

Le conducteur déverrouille alors le pare-chocs 5 et le rabaisse, ouvrant ainsi de nouveau la vanne 16 sur le circuit d'alimentation des soufflets. Les freins étant toujours desserrés, la suspension peut être à nouveau mise en pression sans que se produise de mouvement de recul de la semi-remorque préjudiciable aux béquilles. Les soufflets remontant en pression, les vérins 19 déverrouillent les essieux.

Il est également possible en cas de besoin de déplacer immédiatement la remorque sur une courte distance, par exemple pour dégager le terrain de l'appareil de levage, sans avoir au préalable remis la suspension en pression, sans avoir rabattu le pare-chocs.

En effet, le ressort 25 est choisi de telle sorte que sa force soit inférieure à la pression dans le circuit de freinage. En conséquence cette pression repousse le poussoir de la soupape 17 en surmontant l'action du ressort 25 et un tel déplacement peut alors être effectué en toute sécurité avec les freins fonctionnant normalement.

On remarquera enfin que le fait de prévoir deux soupapes 18 de purge des soufflets constitue une sécurité en cas de défaut de fonctionnement de l'une de ces soupapes, la seconde assurant la purge de l'ensemble des soufflets et par conséquent l'abaissement de la suspension dans les limites du gabarit.

**Revendications**

1. Dispositif de commande automatique de la suspension pneumatique à hauteur variable et des freins d'une semi-remorque du type rail-route comportant un pare-chocs arrière relevable et adaptée pour être transportée sur un wagon-poche comportant des organes de retenue coopérant avec la remorque, caractérisé en ce qu'il comprend des premiers et des seconds moyens (16, 17) reliés mécaniquement au pare-chocs (5) pour isoler les organes pneumatiques (8) de suspension et pour desserrer les freins, respectivement, des troisièmes moyens (19) pour verrouiller les essieux (2) et des quatrièmes moyens (18) adaptés pour coopérer avec les organes de retenue (36) du wagon et purger lesdits organes pneumatiques (8) de suspension.

2. Dispositif suivant la revendication 1, caractérisé en ce que lesdits premiers moyens (16) pour isoler les organes pneumatiques (8) de suspension sont constitués par une vanne de coupure (16) intercalée dans le circuit d'alimentation desdits organes de suspension, sollicitée en position d'ouverture par un ressort et reliée au pare-chocs (5) par un câble Bowden (23) de façon à fermer ledit circuit dans la position relevée du pare-chocs.

3. Dispositif suivant la revendication 1, caractérisé en ce que lesdits seconds moyens (17) pour desserrer les freins sont constitués par une vanne qui, dans la position relevée du pare-chocs (5), est soumise à l'action d'un ressort (25) qui maintient son obturateur en position de desserrage des freins.

4. Dispositif suivant la revendication 3, caractérisé en ce que ledit ressort (25) exerce sur l'obturateur une force inférieure à celle de la pression d'alimentation du circuits de freinage.

5. Dispositif suivant la revendication 1, caractérisé en ce que lesdits moyens (19) pour verrouiller les essieux comprennent pour chaque essieu, au moins un crochet (31, 34) articulé sur le châssis et commandé par un actionneur pour se déplacer entre une position dans laquelle il est en prise avec l'essieu (2) et une position dans laquelle ledit essieu est libéré.

6. Dispositif suivant la revendication 5, caractérisé en ce que ledit actionneur est un vérin pneumatique (26, 27) relié auxdits organes pneumatiques (8) de suspension et dont l'organe mobile (27) est relié audit crochet.

7. Dispositif suivant la revendication 1, caractérisé en ce que lesdits moyens (18) adaptés pour coopérer avec les organes de retenue (36) du wagon et purger lesdits organes pneumatiques (8) de suspension sont constitués par une soupape adaptée pour être actionée par lesdits organes de retenue (36) prévus sur le wagon lorsque la semi-remorque est posée sur celui-ci.

8. Dispositif suivant la revendication 6, caractérisé en ce que ledit organe mobile est une membrane (27) fermant une chambre (26) du vérin, un ressort (29) étant prévu pour solliciter ladite membrane et le crochet (34) en position de verrouillage de l'essieu (2).

9. Semi-remorque du type rail-route à suspension pneumatique à hauteur variable, adaptée pour être transportée sur un wagon-poche comportant des organes de retenue coopérant avec la remorque, caractérisée en ce qu'elle comporte un dispositif de commande automatique de la suspension et des freins tel que défini suivant l'une quelconque des revendications 1 à 8.

FIG.1

FIG.6

FIG.7

FIG.2

0237385

FIG.5

FIG.4

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 142 589   (FRUEHAUF)<br>* En entier *<br><br>--- | 1 | B 61 D    3/18<br>B 62 D   61/12<br>B 62 D   53/06<br>B 60 G   17/04<br>B 60 T    7/12 |
| A | FR-A-2 534 870   (INGE-TRANS)<br>* En entier *<br><br>--- | 1 | |
| A | FR-A-2 456 023   (QUINTON HAZELL)<br>* Page 8, ligne 15  - page 9,<br>ligne 13; figures 1-4 *<br><br>--- | 1 | |
| A | GB-A-2 081 655   (DAIMLER BENZ)<br>* Abrégé; figures *<br><br>--- | 1 | |
| A | US-A-4 344 656   (R. MASTERSON)<br>* Abrégé; figure 1 *<br><br>----- | 1 | |
| | | | **DOMAINES TECHNIQUES RECHERCHES (Int. Cl.4)**<br><br>B 61 D    3<br>B 62 D   53<br>B 62 D   61<br>B 60 G   17<br>B 60 T   11<br>B 60 T   15<br>B 60 T    7<br>B 60 P    3 |

Le présent rapport de recherche a été établi pour toutes les revendications

| Lieu de la recherche | Date d'achèvement de la recherche | Examinateur |
|---|---|---|
| LA HAYE | 29-04-1987 | LINTZ C.H. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

OEB Form 1503 03.82